# FASCICULE DE BREVET EUROPEEN

(11) **EP 2 334 500 B1**
(45) Date de publication et mention de la délivrance du brevet: **22.02.2012**
(21) Numéro de dépôt: 09811113.1
(22) Date de dépôt: 01.09.2009
(51) Int. Cl.: B60C 9/20

(54) **PNEUMATIQUE POUR VEHICULES LOURDS DONT L'ARMATURE DE SOMMET COMPORTE UNE BANDE COMPLEXE**
REIFEN FÜR SCHWERLASTFAHRZEUGE MIT GÜRTELVERSTÄRKUNG MIT EINEM KOMPLEXEN STREIFEN
TYRE FOR HEAVY VEHICLES HAVING A CROWN REINFORCEMENT COMPRISING A COMPLEX STRIP

(30) Priorité: 02.09.2008 FR 0855887
(43) Date de publication de la demande: 22.06.2011
(73) Titulaire: Société de Technologie MICHELIN, 63000 Clermont-Ferrand (FR); MICHELIN Recherche et Technique S.A., 1763 Granges-Paccot (CH)
(72) Inventeur: COGNE, Michael, F-63200 Riom (FR)
(74) Mandataire: Le Cam, Stéphane Georges Elie
(86) Numéro de dépôt international: PCT/EP2009/061288
(87) Numéro de publication internationale: WO 2010/026139

(56) Documents cités:
- WO-A-2005/016668
- FR-A- 2 887 813
- JP-A- 10 217 353
- JP-A- 10 217 716
- US-A- 5 837 077

## Description

La présente invention concerne un pneumatique à armature de carcasse radiale ancrée de part et d'autre à au moins une tringle de bourrelet et ayant une armature de sommet constituée d'au moins deux couches dites de travail, superposées et formées d'éléments de renforcement parallèles dans chaque couche et croisés d'une couche à la suivante en faisant un angle avec la direction circonférentielle du pneumatique.

Les pneumatiques comportant de telles couches de travail présentent, dans le cas de certaines utilisations, des performances d'endurance limitées du fait même de la présence de ces couches de travail.

Il existe en effet des contraintes au niveau de l'armature de sommet et plus particulièrement des contraintes de cisaillement entre les couches de sommet, alliées à une élévation non négligeable de la température de fonctionnement au niveau des extrémités desdites couches, qui ont pour conséquence l'apparition et la propagation de fissures de la gomme au niveau desdites extrémités. Le même problème existe dans le cas de bords de deux couches à éléments de renforcement, ladite autre couche n'étant pas obligatoirement radialement adjacente à la première.

Afin d'améliorer l'endurance de l'armature de sommet de tels pneumatiques, des solutions relatives à la structure et qualité des couches et/ou profilés de mélanges caoutchouteux qui sont disposés entre et/ou autour des extrémités de couches ont été apportées. Toutefois ces solutions présentent leurs limites dans le cas d'utilisations particulières. D'autres solutions ont encore été apportées dans le cas d'utilisations particulières.

Bien que non limitée à ce type d'applications, l'invention sera plus particulièrement décrite en référence à des pneumatiques pour avion et des pneumatiques pour métro.

Concernant les pneumatiques pour avion, l'armature sommet est habituellement constituée de multiple couches parmi lesquelles on retrouve des couches dites de travail, superposées et formées d'éléments de renforcement parallèles dans chaque couche et croisés d'une couche à la suivante. Ces couches sont habituellement réalisées selon des techniques consistant à déposer des éléments de renforcement ou des bandelettes constituées de plusieurs éléments de renforcement en allant d'un bord à l'autre de façon continue pour former une période ou un multiple de période au tour de roue. Selon ces techniques il est ainsi possible de réaliser des couches de travail formées d'éléments de renforcement parallèles dans chaque couche et croisés d'une couche à la suivante qui ne présentent pas d'extrémités libres en bords de nappes et donc conduisent à une amélioration de l'endurance des pneumatiques.

Ces techniques de mises en oeuvre conduisent par contre à des temps de fabrication relativement longs et donc à un coût du pneumatique relativement important.

Concernant les pneumatiques pour les véhicules de métro, l'armature sommet actuelle de ces pneumatiques est essentiellement constituée par l'enroulement circonférentielle d'une bandelette d'éléments de renforcement circonférentiels. Les éléments de renforcement sont habituellement en aramide. Il est connu que ces pneumatiques peuvent présenter une usure irrégulière au niveau des épaules du pneumatique. Des solutions envisageables pour améliorer les propriétés d'usure de ces pneumatiques consisteraient à ajouter des couches de travail d'élément de renforcement parallèles dans chaque couche et croisés d'une couche à la suivante. Par contre, des couches de travail présentant des extrémités d'éléments de renforcement libres au bord des couches nuiraient aux performances d'endurance du pneumatique. Des couches de travail réalisées selon la technique décrite précédemment dans le cas des pneumatiques pour avion conduiraient à des coûts de fabrication élevés pour ce type de pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique. Des éléments de renforcement circonférentiels sont des éléments qui font avec ladite direction des angles compris dans l'intervalle + 2,5°, - 2,5° autour de 0°.

La direction transversale ou axiale du pneumatique est parallèle à l'axe de rotation du pneumatique.

La direction radiale est une direction coupant l'axe de rotation du pneumatique et perpendiculaire à celui-ci. Des éléments de renforcement sensiblement radiaux sont des éléments qui font avec la direction méridienne des angles compris dans l'intervalle + 5°, - 5° autour de 0°.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Un pneumatique ayant les caractéristiques techniques du préambule de la revendication 1 est connu du document US-A-5 837 077.

Les inventeurs se sont donnés pour mission de fournir des pneumatiques pour véhicules lourds, dont les performances d'endurance sont améliorées par rapport aux pneumatiques usuels ou bien pour lesquels le compromis entre les performances d'endurance et le coût de fabrication est amélioré.

Ce but est atteint selon l'invention par un pneumatique selon la revendication 1 comportant une armature de sommet formée d'au moins deux couches de sommet de travail d'éléments de renforcement, elle-même coiffée radialement d'une bande de roulement, ladite bande de roulement étant réunie à deux bourrelets par l'intermédiaire de deux flancs, au moins deux couches de sommet de travail étant formées par enroulement circonférentielle d'une bande complexe formée de deux couches constituées d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue.

Le pneumatique ainsi réalisé selon l'invention comporte des couches d'éléments de renforcement parallèles dans une couche et croisés d'une couche à l'autre qui ne présentent pas d'extrémité sur leurs bords et dont la mise en oeuvre est relativement rapide ; en effet, deux couches sont réalisées simultanément par enroulement circonférentiel d'un élément préfabriqué que constitue la bande complexe. L'enroulement circonférentiel est en effet une technique relativement simple de mise en oeuvre et qui peut être effectuée avec une vitesse rapide ; en outre, comme rappelé précédemment, au moins deux couches sont réalisées simultanément.

Un enroulement circonférentiel correspond à un enroulement de la bande complexe de sorte que les spires formées présentent un angle avec la direction circonférentielle inférieur à 8°.

Selon l'invention, la distance radiale entre les éléments de renforcement respectifs de chacune des couches de sommet formant une bande complexe est inférieure à l'épaisseur d'une couche de sommet et de préférence à inférieure à la moitié de l'épaisseur d'une couche de sommet.

Au sens de l'invention, la distance radiale entre les éléments de renforcement respectifs de chacune des couches de sommet est mesurée radialement entre les génératrices respectivement supérieure et inférieure desdits éléments de renforcement des couches de sommet radialement intérieure et radialement extérieure. L'épaisseur de la couche de sommet est également mesurée selon la direction radiale.

De préférence, chacune des couches étant formées d'éléments de renforcement entre deux calandrages de mélanges polymérique formant chacun une épaisseur respectivement radialement à l'extérieur et radialement à l'intérieur desdits éléments de renforcement, la distance radiale entre les éléments de renforcement respectifs de chacune des couches de sommet est sensiblement équivalente à la somme de l'épaisseur de mélange polymérique du calandrage radialement à l'extérieur des éléments de renforcement de la couche de sommet radialement intérieure et de l'épaisseur de mélange polymérique du calandrage radialement à l'intérieur des éléments de renforcement de la couche de sommet radialement extérieure.

La bande complexe peut être préalablement obtenue selon un procédé consistant à écraser un tube, lui-même formé par l'enroulement en spires jointives selon un angle donné par rapport à la direction longitudinale du tube, d'une bandelette dans laquelle des éléments de renforcements sont parallèles entre eux et à la direction longitudinale de ladite bandelette et enrobés dans un mélange polymérique. La largeur de la bandelette est ajustée en fonction de l'angle avec lequel les spires sont enroulées, de manière à rendre les spires jointives.

Lors de l'écrasement dudit tube, les spires étant parfaitement jointives, la bande complexe obtenue est constituée de deux couches d'éléments de renforcement continus passant d'une couche à l'autre, lesdits éléments de renforcement étant parallèles dans une couche et croisés d'une couche à l'autre avec des angles par rapport à la direction circonférentielle identiques en valeur absolue. La réalisation d'un tube avec des spires jointives permet d'obtenir des éléments de renforcement linéaires dans chacune des couches, exception faite des extrémités axiales de chacune des couches, au niveau desquelles les éléments de renforcement forment des boucles pour assurer la continuité d'une couche à l'autre.

Cette linéarité des éléments de renforcement dans chacune des couches permet de conférer des rigidités longitudinale et de cisaillement constantes sur la largeur des dites couches formant la bande complexe.

L'écrasement dudit tube permet également d'obtenir un couplage des couches de sorte que la distance radiale entre les éléments de renforcement respectifs de chacune des couches est sensiblement équivalente à la somme de l'épaisseur de mélange polymérique du calandrage radialement à l'extérieur des éléments de renforcement de la couche radialement intérieure et de l'épaisseur de mélange polymérique du calandrage radialement à l'intérieur des éléments de renforcement de la couche radialement extérieure, lesdits calandrages venant au contact l'un de l'autre.

Un tel couplage des deux couches de sommet favorise l'obtention d'une rigidité longitudinale et d'une rigidité de cisaillement élevées. Il en découle indirectement un allègement du pneumatique qui nécessiterait plusieurs épaisseurs de bande complexe si les couches formant celles-ci n'étaient pas suffisamment couplées afin d'obtenir les rigidités longitudinale et de cisaillement souhaitées.

Selon un mode de réalisation particulièrement avantageux, les éléments de renforcement de ladite bande complexe forment un angle avec la direction circonférentielle compris entre 10 et 45°.

Comme expliqué précédemment l'angle formé par les éléments de renforcement avec la direction circonférentielle correspond à l'angle que forment les spires du tube avec la direction longitudinale du tube avant écrasement de celui-ci. Des angles réduits peuvent faciliter la réalisation de la bande complexe selon le procédé tel que décrit précédemment.

Selon une première variante de réalisation, la bande complexe est enroulée circonférentiellement avec un recouvrement axial, de préférence égal à au moins la demi largeur de ladite bande complexe. Le recouvrement axial permet d'éviter la création de zones dans lesquelles la présence d'éléments de renforcement est moins importante. Un recouvrement axial d'au moins la demi largeur de la bande complexe autorise la réalisation simultanée de quatre couches de travail dont les éléments de renforcement sont croisées d'une couche à la suivante, les angles des éléments de renforcement étant identiques en valeur absolue dans chacune des couches.

Dans le cas de la réalisation d'un pneumatique pour avion, un recouvrement axial au moins égal aux deux tiers de la largeur de la bande complexe peut permettre la réalisation simultanée d'au moins six couches de travail.

Selon une autre variante de réalisation de l'invention, la bande complexe est enroulée circonférentiellement pour former des spires juxtaposées. Une telle variante de réalisation autorise la création de deux couches de travail sans créer de surépaisseur.

Selon un premier mode de réalisation de l'invention, les éléments de renforcement de la bande complexe sont métalliques.

Avantageusement selon ce premier mode de réalisation de l'invention, les éléments de renforcement de la bande complexe sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement de la bande complexe sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements de la bande complexe sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation de la bande complexe selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans la bande complexe permet notamment de réaliser simplement le tube et l'écrasement dudit tube selon le procédé décrit précédemment en limitant les risques de rupture des éléments de renforcement et améliorant l'aptitude de la bande complexe à demeurer plane après sa réalisation, notamment lorsque l'angle formé entre la direction circonférentielle et les éléments de renforcement des deux couches de sommet de travail est supérieur à 40°.

Les éléments métalliques sont préférentiellement des câbles d'acier.

Selon un deuxième mode de réalisation de l'invention, les éléments de renforcement de la bande complexe sont en matériau textile tels que des matériaux de type nylon, aramide, PET, rayonne, polycétone.

Selon un troisième mode de réalisation de l'invention, les éléments de renforcement de la bande complexe sont en matériau hybride. Il peut s'agir de matériaux hybrides textiles tels que des éléments de renforcement constitués d'aramide et de nylon tels que ceux décrits dans le document WO 02/085646 ou bien encore de matériaux hybrides combinant des matériaux textile et des matériaux métalliques.

Des réalisations de l'invention prévoient que l'armature de sommet comporte au moins une couche d'éléments de renforcement circonférentiels. Notamment dans le cas d'un pneumatique pour métro tel que présenté précédemment, la bande complexe sera mise en place radialement à l'extérieur de la couche d'éléments de renforcement circonférentiels.

Selon d'autres réalisations de l'invention, l'armature de sommet peut encore être complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la bande complexe qui lui est radialement adjacente.

Avantageusement encore selon l'invention, l'angle formé avec la direction circonférentielle par les éléments de renforcement de la bande complexe est inférieur à 30° et de préférence inférieur à 25°, notamment lorsqu'une une couche d'éléments de renforcement circonférentiels est présente pour diminuer les contraintes de tension agissant sur les éléments circonférentiels axialement le plus à l'extérieur.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 3 qui représentent :
- figure1, une vue en perspective et en écorchée d'un schéma d'une bande complexe selon l'invention,
- figure 2, une vue méridienne d'un schéma de la bande complexe de la figure 1,
- figure 3, une vue méridienne d'un schéma d'un pneumatique comportant la bande complexe de la figure 1.

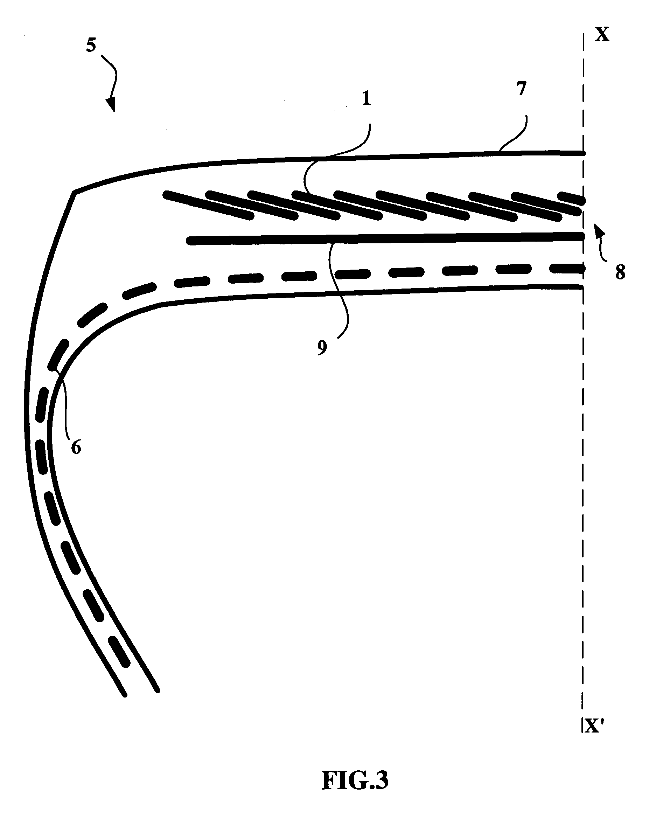

Les figures ne sont pas représentées à l'échelle pour en simplifier la compréhension. La figure 3 ne représente qu'une demi-vue d'un pneumatique qui se prolonge de manière symétrique par rapport à l'axe XX' qui représente le plan médian circonférentiel, ou plan équatorial, d'un pneumatique.

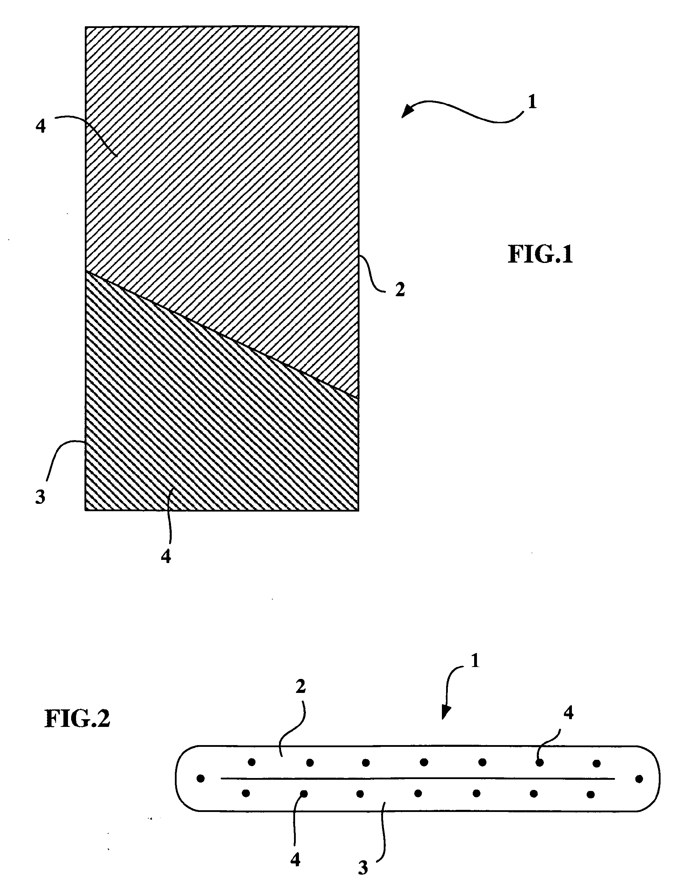

La figure 1 représente un schéma en écorché d'une bande complexe 1 constitué de deux couches 2, 3 d'éléments de renforcement 4 formant un angle avec la direction circonférentielle, parallèles dans une couche et croisés d'une couche à l'autre avec des angles par rapport à la direction circonférentielle identiques en valeur absolue.

La bande complexe 1 est obtenue selon un procédé qui consiste à écraser un tube formé par l'enroulement en spires jointives selon un angle donné par rapport à la direction longitudinale du tube, d'une bandelette dans laquelle des éléments de renforcement sont parallèles entre eux et à la direction longitudinale de ladite bandelette et enrobés dans un mélange polymérique. Lors de l'écrasement du tube, les spires étant parfaitement jointives, la bande complexe obtenue est constituée de deux couches d'éléments de renforcement continus passant d'une couche à l'autre.

La réalisation d'un tube avec des spires jointives permet d'obtenir des éléments de renforcement 4 linéaires dans chacune des couches, exception faite des extrémités axiales de chacune des couches, au niveau desquelles les éléments de renforcement forment des boucles pour assurer la continuité d'une couche à l'autre.

La figure 2 correspond à une vue méridienne d'une représentation schématique d'une telle bande complexe 1. Cette figure montre que la bande complexe 1 est constituée des deux couches 2, 3 d'éléments de renforcement 4 dans les quelles lesdits éléments de renforcement sont continus d'une couche à l'autre.

La bande complexe 1 ainsi représentée sur les figures présentent l'avantage de constituer un système de deux couches d'éléments de renforcement parallèles entre eux et croisés d'une ouche à la suivante, lesdites couches ne comportant pas d'extrémités d'éléments de renforcement libres.

La bande complexe 1 est réalisée à partir d'une bandelette constituée d'éléments de renforcement présentant un diamètre égal à 1.14 mm noyés entre deux calandrages d'épaisseur 0.11 mm. Chacune des couches présentent ainsi une épaisseur de 1.36 mm et la bande complexe une épaisseur de 2.72 mm, la distance radiale entre les éléments de renforcement respectifs de chacune des couches de sommet étant égale à 0.22 mm. La distance radiale entre les éléments de renforcement respectifs de chacune des couches de sommet est égale à la somme des épaisseurs du calandrage radialement à l'extérieur des éléments de renforcement de la couche radialement intérieure et du calandrage radialement à l'intérieur des éléments de renforcement de la couche radialement extérieure.

La figure 3 illustre un pneumatique 5 comprenant une armature de carcasse radiale 6 ancrée dans deux bourrelets, non représentés sur la figure et surmonté d'une bande de roulement 7. L'armature de carcasse 6 est encore frettée par une armature de sommet 8.

L'armature est constituée d'une première couche d'éléments de renforcement 9. il s'agit par exemple d'une couche d'éléments de renforcement circonférentielle dans le cas d'un pneumatique pour métro.

La première couche 9 est radialement couverte par une bande complexe 1 disposée par enroulement circonférentiel. L'enroulement est effectué selon cette représentation pour obtenir un recouvrement axial de la moitié de la bande à chaque tour. L'enroulement de la bande complexe 1 forme ainsi quatre couches radialement superposées d'éléments de renforcement parallèles entre eux dans une même couche et croisés d'une couche à la suivante sans extrémités libres.

Selon d'autres variantes de réalisation les spires formées lors de l'enroulement de la bande complexe peuvent être juxtaposées de façon à ne former que deux couches d'éléments radialement superposées. Les spires peuvent encore être axialement recouvertes au 2/3 de la largeur de la bande complexe, lors de l'enroulement, pour former six couches radialement superposées.

Dans le cas de pneumatiques pour avions, l'armature de sommet comporte encore le plus souvent une couche de protection constituée d'éléments de renforcement métalliques, ladite couche étant la couche de l'armature de sommet radialement la plus à l'extérieure.

Des essais ont été réalisés avec des pneumatiques pour métro de dimension 345/85R16 réalisés selon l'invention conformément à la représentation de la figure 3, d'autres avec des pneumatiques dits de référence. Les pneumatiques de référence comporte uniquement la couche d'éléments de renforcement circonférentiels 9.

Les essais ont consisté en des roulages simulant des conditions normales d'usages en termes de charge et de vitesse.

Ces essais ont mis en évidence qu'après un kilométrage de l'ordre de 300 000 km, les pneumatiques de référence présentent une usure irrégulière, notamment plus prononcée aux épaules alors que la bande de roulement des pneumatiques selon l'invention montrent une usure régulière après avoir effectuée le même nombre de kilomètres.

En outre, l'analyse des pneumatiques selon l'invention n'a mis en évidence aucun signe de vieillissement prématuré de l'armature de sommet ou des mélanges de polymères environnants, comme la nature de la bande complexe pouvait le laisser présager, celle-ci ne faisant apparaître aucune extrémité libre des éléments de renforcement.

D'autres essais ont été réalisés avec des pneumatiques d'avion de dimensions 46 x 17.0 R 20 et 1400 x 530 R 23. Les essais ont consisté à comparer des pneumatiques usuels à des pneumatiques selon l'invention en termes d'usure et d'endurance. Par rapport au pneumatique de référence, le pneumatique selon l'invention présente une architecture semblable dans laquelle les couches d'éléments de renforcement, réalisées par trancannage, c'est-à-dire selon des techniques consistant à déposer des éléments de renforcement ou des bandelettes constituées de plusieurs éléments de renforcement en allant d'un bord à l'autre de façon continue pour former une période ou un multiple de période au tour de roue, sont remplacées par des bandes complexes de façon à retrouver le même nombre de couches radialement superposées.

Les différents essais réalisés ont mis en évidence que les pneumatiques selon l'invention présentent des résultats tant en usure qu'en endurance tout à fait comparables à ceux obtenus avec les pneumatiques de référence.

Par contre, le temps de fabrication des pneumatiques selon l'invention et donc leur coût peut est nettement moins important que ceux des pneumatiques de référence, l'enroulement d'une bande complexe selon l'invention étant une étape dans la fabrication du pneumatique beaucoup plus rapide que l'étape de fabrication par trancannage d'un nombre équivalent de couches d'éléments de renforcement comme décrit précédemment. Les gains en termes de temps pour la fabrication d'un pneumatique d'avion peuvent être de l'ordre de 60% en ce qui concerne le temps de confection de l'armature de sommet.

## Revendications

1. Pneumatique (5) comportant une armature de sommet (8) formée d'au moins deux couches de sommet de travail d'éléments de renforcement (4), elle-même coiffée radialement d'une bande de roulement (7), ladite bande de roulement étant réunie à deux bourrelets par l'intermédiaire de deux flancs, au moins deux couches de sommet de travail étant formées par enroulement circonférentiel d'une bande complexe (1) formée de deux couches (2, 3) constituées d'éléments de renforcement (4) continus passant d'une couche à l'autre, lesdits éléments de renforcement (4) étant parallèles dans une couche et croisés d'une couche à l'autre avec des angles par rapport à la direction circonférentielle identiques en valeur absolue, **caractérisé en ce que** la distance radiale entre les éléments de renforcement respectifs de chacune des couches de sommet formant une bande complexe est inférieure à l'épaisseur d'une couche de sommet.

2. Pneumatique (5) selon la revendication 1, **caractérisé en ce que** la distance radiale entre les éléments de renforcement (4) respectifs de chacune des couches (2, 3) de sommet formant une bande complexe (1) est inférieure à la moitié de l'épaisseur d'une couche (2, 3) de sommet.

3. Pneumatique selon la revendication 1 ou 2, **caractérisé en ce que** les éléments de renforcement (4) de ladite bande complexe (1) forment un angle avec la direction circonférentielle compris entre 10 et 45°.

4. Pneumatique (5) selon la revendication 1 à 3, **caractérisé en ce que** la bande complexe (1) est enroulée circonférentiellement avec un recouvrement axial, de préférence égal à au moins la demi largeur de ladite bande complexe.

5. Pneumatique (5) selon la revendication 1 à 3, **caractérisé en ce que** la bande complexe (1) est enroulée circonférentiellement pour former des spires juxtaposées.

6. Pneumatique (5) selon l'une des revendications précédentes, **caractérisé en ce que** les éléments de renforcement (4) de la bande complexe (1) sont métalliques.

7. Pneumatique (5) selon la revendication 6, **caractérisé en ce que** les éléments de renforcement (4) de la bande complexe (1) sont des éléments de renforcement métalliques présentant un module sécant à 0,7 % d'allongement compris entre 10 et 120 GPa et un module tangent maximum inférieur à 150 GPa.

8. Pneumatique (5) selon l'une des revendications 1 à 5, **caractérisé en ce que** les éléments de renforcement (4) de la bande complexe (1) sont en matériau textile.

9. Pneumatique (5) selon l'une des revendications 1 à 5, **caractérisé en ce que** les éléments de renforcement (4) de la bande complexe (1) sont en matériau hybride.

10. Pneumatique (5) selon l'une des revendications précédentes, **caractérisé en ce que** l'armature de sommet (8) comporte au moins une couche (9) d'éléments de renforcement circonférentiels.

11. - Pneumatique (5) selon l'une des revendications précédentes, **caractérisé en ce que** l'armature de sommet (8) est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

## Claims

1. Tyre (5) comprising a crown reinforcement (8) formed of at least two working crown layers of reinforcing elements (4), itself radially capped by a tread strip, the said tread strip (7) being connected to two beads via two sidewalls, at least two working crown layers being formed by circumferential winding of a complex strip (1) formed of two layers (2, 3) consisting of continuous reinforcing elements (4) passing from one layer to the other, the said reinforcing elements (4) being parallel within a layer and crossed from one layer to the other at angles with respect to the circumferential direction that are identical in terms of absolute value **characterized in that** the radial distance between the respective reinforcing elements of each of the crown layers forming a complex strip is less than the thickness of a crown layer.

2. Tyre (5) according to Claim 1, **characterized in that** the radial distance between the respective reinforcing elements (4) of each of the crown layers (2, 3) forming a complex strip (1) is less than half the thickness of a crown layer (2, 3).

3. Tyre according to Claim 1 or 2, **characterized in that** the reinforcing elements (4) of the said complex strip (1) make an angle of between 10 and 45° with the circumferential direction.

4. Tyre (5) according to Claim 1 to 3, **characterized in that** the complex strip (1) is wound circumferentially with an axial overlap, preferably equal to at least half the width of the said complex strip.

5. Tyre (5) according to Claim 1 to 3, **characterized in that** the complex strip (1) is wound circumferentially to form juxtaposed turns.

6. Tyre (5) according to one of the preceding claims, **characterized in that** the reinforcing elements (4) of the complex strip (1) are made of metal.

7. Tyre (5) according to Claim 6, **characterized in that** the reinforcing elements (4) of the complex strip (1) are metal reinforcing elements having a secant modulus at 0.7% elongation of between 10 and 120 GPa and a maximum tangent modulus of less than 150 GPa.

8. Tyre (5) according to one of Claims 1 to 5, **characterized in that** the reinforcing elements (4) of the complex strip (1) are made of a textile material.

9. Tyre (5) according to one of Claims 1 to 5, **characterized in that** the reinforcing elements (4) of the complex strip (1) are made of a hybrid material.

10. Tyre (5) according to one of the preceding claims, **characterized in that** the crown reinforcement (8) comprises at least one layer (9) of circumferential reinforcing elements.

11. Tyre (5) according to one of the preceding claims, **characterized in that** the crown reinforcement (8) is supplemented radially on the outside by at least one supplementary layer, known as a protective layer, of reinforcing elements know as elastic elements, oriented with respect to the circumferential direction at an angle of between 10° and 45° and in the same direction as the angle formed by the inextensible elements of the working layer radially adjacent to it.

## Patentansprüche

1. Luftreifen (5), der eine Oberseitenbewehrung (8) umfasst, die aus wenigstens zwei Arbeitsoberseitenschichten aus Verstärkungselementen (4) gebildet ist und ihrerseits radial von einer Laufbahn (7) abgedeckt ist, wobei die Laufbahn über zwei Seitenflächen mit zwei Wulsten vereinigt ist, wobei wenigstens zwei Arbeitsoberseitenschichten durch Wicklung in Umfangsrichtung eines komplexen Bandes (1), das aus zwei Schichten (2, 3) gebildet ist, die aus ununterbrochenen Verstärkungselementen (4) gebildet sind, die von einer Schicht zur anderen verlaufen, gebildet sind, wobei die Verstärkungselemente (4) in einer Schicht parallel und von einer Schicht zur anderen unter Winkeln in Bezug auf die Umfangsrichtung, die den gleichen Absolutwert besitzen, gekreuzt sind, **dadurch gekennzeichnet, dass** der radiale Abstand zwischen den jeweiligen Verstärkungselementen jeder der Oberseitenschichten, die ein komplexes Band bilden, kleiner ist als die Dicke einer Oberseitenschicht.

2. Luftreifen (5) nach Anspruch 1, **dadurch gekennzeichnet, dass** der radiale Abstand zwischen den jeweiligen Verstärkungselementen (4) jeder der Oberseitenschichten (2, 3), die ein komplexes Band (1) bilden, kleiner als die halbe Dicke einer Oberseitenschicht (2, 3) ist.

3. Luftreifen nach Anspruch 1 oder 2, **dadurch gekennzeichnet, dass** die Verstärkungselemente (4) des komplexen Bandes (1) zu der Umfangsrichtung einen Winkel im Bereich von 10 bis 45° bilden.

4. Luftreifen (5) nach Anspruch 1 bis 3, **dadurch gekennzeichnet, dass** das komplexe Band (1) in Umfangsrichtung mit einer axialen Abdeckung, die vorzugszueise wenigstens gleich der halben Breite des komplexen Bandes ist, gewickelt ist.

5. Luftreifen (5) nach Anspruch 1 bis 3, **dadurch gekennzeichnet, dass** das komplexe Band (1) in Umfangsrichtung gewickelt ist, um nebeneinander liegende Windungen zu bilden.

6. Luftreifen (5) nach einem der vorhergehenden Ansprüche, **dadurch gekennzeichnet, dass** die Verstärkungselemente (4) des komplexen Bandes (1) metallisch sind.

7. Luftreifen (5) nach Anspruch 6, **dadurch gekennzeichnet, dass** die Verstärkungselemente (4) des komplexen Bandes (1) metallische Verstärkungselemente sind, die ein Sekantenmodul bei 0,7 % Dehnung im Bereich von 10 bis 120 GPa und ein maximales Tangentenmodul kleiner als 150 GPa aufweisen.

8. Luftreifen (5) nach einem der Ansprüche 1 bis 5, **dadurch gekennzeichnet, dass** die Verstärkungselemente (4) des komplexen Bandes (1) aus einem Textilmaterial bestehen.

9. Luftreifen (5) nach einem der Ansprüche 1 bis 5, **dadurch gekennzeichnet, dass** die Verstärkungselemente (4) des komplexen Bandes (1) aus einem Hybridmaterial bestehen.

10. Luftreifen (5) nach einem der vorhergehenden Ansprüche, **dadurch gekennzeichnet, dass** die Oberseitenbewehrung (8) wenigstens eine Schicht (9) aus Umfangsverstärkungselementen umfasst.

11. Luftreifen (5) nach einem der vorhergehenden Ansprüche, **dadurch gekennzeichnet, dass** die Oberseitenbewehrung (8) radial außerhalb durch wenigstens eine zusätzliche so genannte Schutzschicht aus so genannten elastischen Verstärkungselementen, die in Bezug auf die Umfangsrichtung unter einem Winkel im Bereich von 10° bis 45° und in der gleichen Richtung wie der Winkel, der durch die nicht dehnbaren Elemente der Arbeitsschicht, die zu ihr radial benachbart ist, gebildet wird, vervollständigt ist.
